# EUROPÄISCHE PATENTANMELDUNG

(11) **EP 1 174 981 A1**
(43) Veröffentlichungstag der Anmeldung: **23.01.2002**
(21) Anmeldenummer: 00810642.9
(22) Anmeldetag: 19.07.2000
(51) Int. Cl.: H02K 1/32, H02K 3/24

(54) **Rotor für eine elektrische Kraft- und/oder Arbeitsmaschine sowie Verwendung des Rotors**

(71) Anmelder: ABB Industrie AG, 5400 Baden (CH)
(72) Erfinder: Jakoby,Ralf,Dr., 5224 Unterbözberg (CH); Popp,Oliver,Ph.D., 5442 Fislisbach (CH); von Wolfersdorf,Jens,Dr., 5417 Untersiggenthal (CH)
(74) Vertreter: ABB Patent Attorneys

(57) **Zusammenfassung**

Die vorliegende Erfindung offenbart einen Rotor (1) für elektrische Motoren oder Generatoren, welcher eine Vielzahl radialer Kühlkanäle (6) aufweist, die in Umfangsrichtung durch radiale Trennstege (4, 7) voneinander getrennt sind. Mindestens ein Teil dieser Trennstege (4, 7) wird ganz oder teilweise von den Rotorwicklungsstäben (4) gebildet und ist an der dem Zentrum des Rotors (1) zugewandten Seite spitz zulaufend ausgebildet, so dass diese der radial nach aussen strömenden Kühlmediumströmung einen möglichst geringen Widerstand entgegensetzen. Hierdurch wird, speziell bei selbstventilierenden Rotoren (1), eine deutliche Verbesserung der Rotorkühlung erzielt.

## Beschreibung

### Technisches Gebiet

Die vorliegende Erfindung betrifft einen Rotor für eine elektrische Kraft- und/oder Arbeitsmaschine sowie die Verwendung des Rotors gemäss den Oberbegriffen der unabhängigen Patentansprüche.

### Stand der Technik

Bei elektrischen Motoren und Generatoren ist es erforderlich, die durch elektrische Verluste im Rotor und Stator entstehende Wärme abzuführen, damit zulässige Bauteiltemperaturen und Toleranzen eingehalten werden können. Bei bestimmten Rotorenbauweisen ist es üblich, die erzeugte Wärme dadurch abzuführen, dass im Rotor angeordnete radiale Kühlkanäle von innen nach aussen von einem Kühlmedium, wie z.B. Luft, durchströmt werden und dabei Wärme von den Rotorwicklungen und den Blechpacketen an das Kühlmedium abgegeben wird. Da viele dieser Maschinen nicht über separate Kühlmediumpumpen, wie z.B. separate Kühlluftgebläse, verfügen, sondern die Strömung in den Kühlkanälen durch Eigenventilation des Rotors erzeugt werden muss, sind die erzielbaren Kühlleistungen und damit die Leistungsfähigkeit bzw. Lebensdauer solcher Maschinen unbefriedigend.

### Darstellung der Erfindung

Es stellt sich daher die Aufgabe einen Rotor für eine elektrische Kraft- oder Arbeitsmaschine mit verbesserter Kühlungsfähigkeit zur Verfügung zu stellen.

Diese Aufgabe wird vom dem Rotor gemäss Anspruch 1 gelöst.

Demgemäss weist der Rotor für eine elektrische Kraftmaschine oder Arbeitsmaschine oder für eine Kombination aus beiden Maschinentypen radiale Kühlkanäle auf, welche in Umfangsrichtung durch mehrere radiale Trennstege voneinander getrennt sind. Mindestens ein Teil dieser Trennstege wird ausschliesslich oder teilweise von den Rotorwicklungen, welche bevorzugterweise als axiale Rotorwicklungsstäbe ausgebildet sind, gebildet, damit neben einer indirekten Wärmeübertragung von den Wicklungen über die Blechpackete auf das Kühlmedium auch eine direkte Wärmeübertragung von einer Teiloberfläche der Wicklungen bzw. Wicklungsstäbe auf das Kühlmedium möglich ist. Diese mindestens teilweise von den Rotorwicklungen bzw. Rotorwicklungsstäben gebildeten Trennstege werden im Folgenden auch als Wicklungstrennstege bezeichnet. An ihrer dem Rotorzentrum zugewandten Seite weisen die Wicklungstrennstege eine im wesentlichen spitz zulaufende, bevorzugterweise keilförmige Aussenkontur auf, wodurch eine möglichst strömungsverlustarme Aufteilung einer radial vom Rotorinneren nach aussen strömenden Kühlmediumströmung in zwei radiale Teilströme erreicht wird. Im wesentlichen spitz zulaufend bedeutet, dass die senkrecht der Kühlmediumströmung entgegenstehende Fläche klein ist gegenüber der Erstreckung des jeweiligen Wicklungstrennstegs in Umfangsrichtung. Insbesondere sind auch Konturen vorgesehen welche ballig gewölbt nach vorne zulaufen bzw. gerundet sind.

Es hat sich gezeigt, dass hierdurch die Kühlung des Rotors gegenüber Rotoren ähnlicher Bauweise deutlich verbessert werden kann, wodurch bei gleicher Maschinenleistung infolge abgesenkter Bauteiltemperaturen höhere Lebensdauern oder bei gleicher Lebensdauer grössere Maschinenleistungen erzielt werden können.

Die spitz zulaufende bzw. keilförmige Aussenkontur der Wicklungstrennstege wird in einer bevorzugten Ausführungsform durch ein entsprechendes Ausformen der Wicklungskontur bzw. des Wicklungsstabquerschnitts erreicht, wobei es von Vorteil ist, wenn diese Trennstege einstückig von den Wicklungen oder Wicklungsstäben gebildet werden.

In einer anderen bevorzugten Ausführungsform wird diese Formgebung durch ein Anordnen von Formstücken an der dem Rotorzentrum zugewandten Seite derselben erreicht.

Der erfindungsgemässe Rotor eignet sich besonders für die Verwendung in einem gasgekühlten Motor oder Generator oder in einer gasgekühlten Maschine, welche je nach Wunsch als Motor oder Generator betrieben werden kann. Das Kühlgas kann dabei in einem geschlossenen Kreislauf mit Wärmetauschern umlaufen (z.B. ein geschlossener Wasserstoffkreislauf) oder aus der Umgebung angesaugt und an die Umgebung abgegeben werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Hälfte eines Elektromotorenrotors teilweise im Schnitt dargestellt;
Fig. 2 einen Schnitt entlang der Linie A-A in Fig. 1; und
Fig. 3 einen weiteren Rotor im Schnitt wie in Fig. 2.

### Wege zur Ausführung der Erfindung

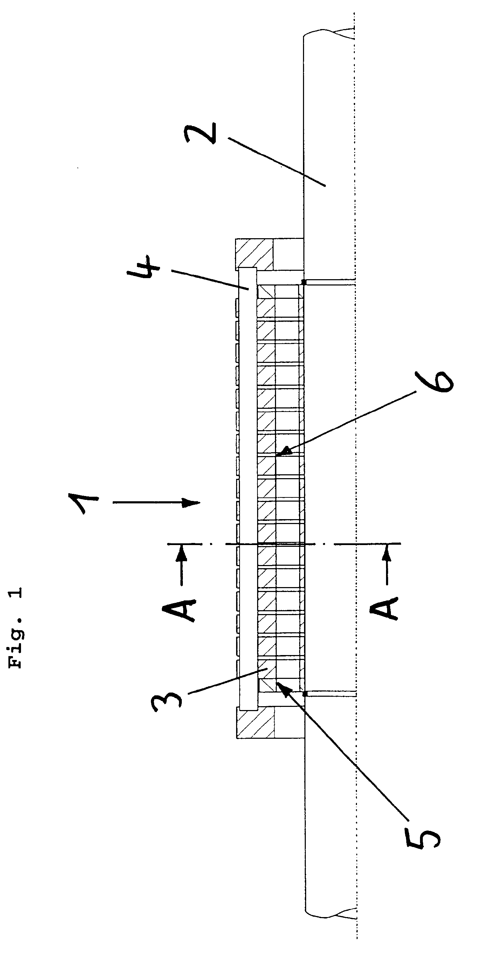

Eine bevorzugte Ausführung der Erfindung ist in Fig. 1 dargestellt. Die Zeichnung zeigt eine Hälfte eines luftgekühlten Elektromotorenrotors 1 teilweise im Schnitt. Wie zu erkennen ist, umfasst der Rotor 1 die Rotorenwelle 2 (nicht geschnitten dargestellt), die Blechpackete 3 und die Rotorwicklungsstäbe 4. Der Rotor ist selbstventilierender Bauart und weist an den beiden Stirnseiten seiner Blechpackete 3 axiale Bohrungen 5 auf, welche sich axial durch diese hindurch erstrecken und als axiale Ansaugöffnungen für Rotorkühlluft dienen. Neben der hier dargestellten Ausgestaltung der axialen Ansaugöffnungen ist es ebenso vorgesehen, die Rotorenwelle 2 mit sich radial nach aussen erstreckenden Längsschlitzen zu versehen, welche sich zudem radial nach aussen hin erweitern. Hierdurch entstehen an den Stirnflächen axiale Ansaugöffnungen mit kreisringsegmentförmigem Querschnitt. Wird der Rotor 1 in Rotation versetzt, so wird infolge der Fliehkraft Kühlluft in den axial zwischen den Blechpacketen 3 angeordneten radialen Kühlkanälen 6 nach aussen gefördert, wodurch ein Unterdruck in den Bohrungen 5 entsteht und somit eine Kühlluftströmung erzeugt wird, welche axial in die Bohrungen 5 hinein eintritt und radial aus den Kühlkanälen 6 hinaus austritt.

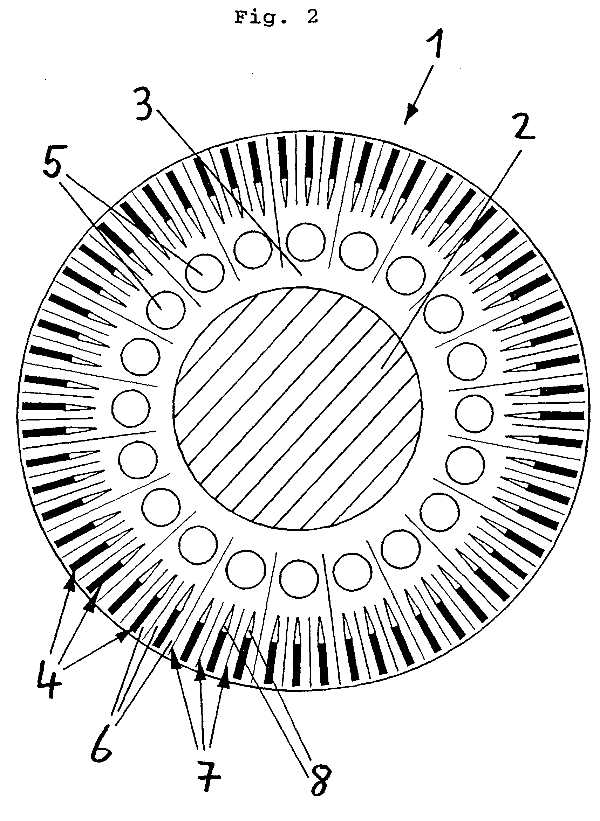

Wie in Verbindung mit Fig. 2, welche einen Schnitt entlang der Linie A-A in Fig. 1 zeigt, wobei der Rotor hier vollständig dargestellt ist, zu erkennen ist, treten die Rotorwicklungsstäbe 4 axial durch die Kühlkanäle 5 hindurch und bilden dabei mit ihren zwischen den Blechpacketen 3 angeordneten Erstreckungen radiale Trennstege aus, welche in Umfangsrichtung gesehen jeweils zwei radiale Kühlkanäle 6 voneinander trennen. An der dem Rotorzentrum zugewandten Seite der Wicklungsstäbe 4 sind keilförmige Formstücke 8 angeordnet, wodurch die Rotorwicklungsstäbe 4 und die Formstücke 8 gemeinsame Körper ausbilden, die in der Kühlluftströmung von ihrer keilförmigen Seite her angeströmt werden und dadurch ein senkrechtes Auftreffen der Kühlluftströmung auf Oberflächen bei der Aufteilung derselben vermeidet. Hierdurch werden die Strömungsverluste verringert und die Kühlung des Rotors 1 verbessert. Wie weiter zu erkennen ist, weist der dargestellte Rotor 1 ausserdem radiale Trennstege 7 in Umfangsrichtung zwischen den Kühlkanälen 6 auf, welche keinen Rotorwicklungsstab 4 umfassen und gleichzeitig als axiale Stützstege zwischen den Blechpacketen 3 dienen. Diese wicklungslosen Trennstege 7 wechseln sich in Umfangsrichtung gesehen jeweils mit den von den Wicklungsstäben 4 und den Formstücken 8 gebildeten Wicklungstrennstegen ab und weisen teilweise eine grössere radiale Erstreckung auf als die Letztgenannten. Im dargestellten Ausführungsbeispiel erstreckt sich jeder dritte wicklungslose Trennsteg 7 deutlich weiter in Richtung des Rotorzentrums als die beiden vor bzw. nach ihm angeordneten wicklungslosen Trennstege 7, und zwar bis in den Bereich der radialen Erstreckungen der axialen Bohrungen 5. Hierdurch wird jeder Bohrung 5 ein bestimmtes radiales Segment zugeordnet, welches sie mit Kühlluft versorgt. Zudem entsteht jeweils eine Art Hauptkühlluftkanal, der an radial fortgeschrittener Position durch drei von den durch die Rotorwicklungsstäbe 4 und die Formstücke 8 gebildete Wicklungstrennstege und durch zwei wicklungslose Trennstege 7 in die einzelnen Kühlluftkanäle aufgeteilt wird. Diese Grobsegmentierung durch Trennstege 7 mit einer grossen radialen Erstreckung in Richtung des Rotorzentrums hat den Vorteil, dass sich bereits frühzeitig und vor der Aufteilung in die einzelnen Kühlkanäle 6 eine im wesentlichen radiale Kühlluftströmung ausbildet, welche ebenfalls zur Verringerung von Strömungsverlusten beiträgt.

Lässt sich auf Grund geometrischer Gegebenheiten nicht jeder axialen Ansaugöffnung 5 eine identische Anzahl von durch die Trennstege 4, 7 gebildeten Kühlkanälen 6 zuordnen, so ist es ebenso vorgesehen, in Umfangsrichtung gesehen zwischen den Ansaugöffnungen 5 wicklungslose Trennstege anzuordnen, von denen ein Teil oder auch alle separat von den zuvor erwähnten Trennstegen 4, 7 ausgebildet sind. Die separat ausgebildeten Trennstege zwischen den Ansaugöffnungen 5 bilden dabei praktisch eine zweite, konzentrisch in der ersten Anordnung von Trennstegen 4, 7 angeordnete Anordnung wicklungsloser Trennstege aus, welche bevorzugterweise keine Überlappung in radialer Richtung mit der ersten Anordnung von Trennstegen 4, 7 aufweist.

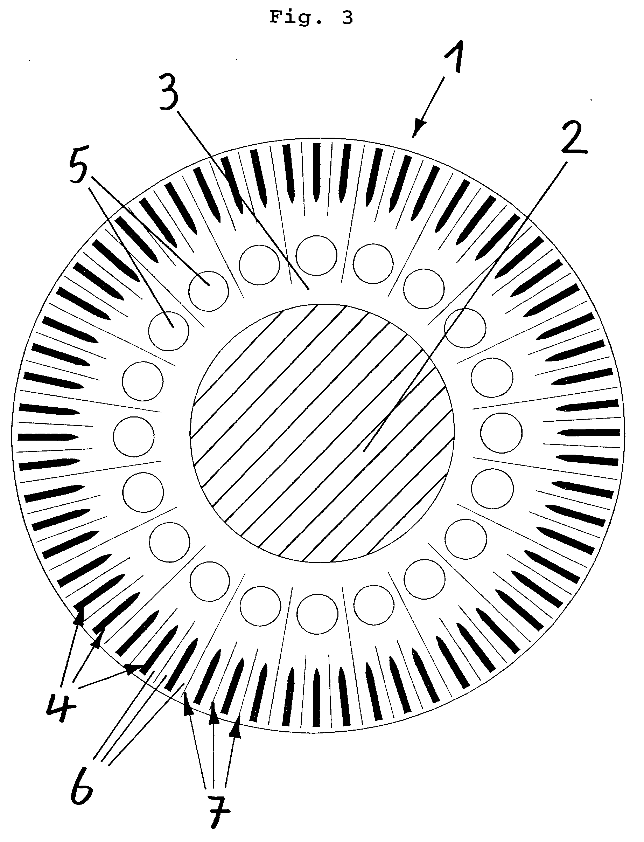

Fig. 3 zeigt einen Rotor 1 praktisch identischer Bauart wie der Rotor 1 in Fig. 2, jedoch mit dem Unterschied, dass hier die Rotorwicklungsstäbe 4 auf ihrer dem Rotorzentrum zugewandten Seite spitz zulaufend ausgebildet sind und die mindestens teilweise von den Wicklungsstäben 4 gebildeten Wicklungstrennstege 4 hier einstückig von den Wicklungsstäben 4 gebildet werden. Auch erstrecken sich in diesem Beispiel alle wicklungslosen Trennstege 7 radial weiter in Richtung des Rotorzentrums als die von den Wicklungsstäben 4 gebildeten Trennstege.

### Bezugszeichenliste

- 1: Rotor
- 2: Rotorenwelle
- 3: Blechpacket
- 4: Rotorwicklungsstab
- 5: axiale Bohrung
- 6: radialer Kühlluftkanal
- 7: wicklungsloser Trennsteg (Stützsteg)
- 8: Formstück

## Patentansprüche

1. Rotor für eine elektrische Kraft- und/oder Arbeitsmaschine mit radialen Kühlkanälen (6) welche in Umfangsrichtung durch radiale Trennstege (4, 7) voneinander getrennt sind und wobei mindestens ein Teil dieser Trennstege (4, 7) Wicklungstrennstege (4) sind, welche mindestens teilweise von den Rotorwicklungen (4) gebildet werden zur Kühlung derselben, **dadurch gekennzeichnet, dass** ein Teil oder alle der Wicklungstrennstege (4) an der dem Rotorzentrum zugewandten Seite im wesentlichen spitz zulaufend ausgebildet sind.

2. Rotor nach Anspruch 1, **dadurch gekennzeichnet, dass** die Rotorwicklungen (4) an ihrer dem Rotorzentrum zugewandten Seite im wesentlichen spitz zulaufend, insbesondere keilförmig, ausgebildet sind und insbesondere, dass mindestens ein Teil oder alle der Wicklungstrennstege (4) einstückig von den Rotorwicklungen (4) gebildet werden.

3. Rotor nach einem der vorangehenden Ansprüche, **dadurch gekennzeichnet, dass** mindestens ein Teil oder alle der Wicklungstrennstege (4) separat ausgebildete und spitz zulaufende, insbesondere keilförmige, Formstücke (8) umfassen, und insbesondere, dass diese Formstücke (8) an der dem Rotorzentrum zugewandten Seite der Rotorwicklungen (4) angeordnet sind.

4. Rotor nach einem der vorangehenden Ansprüche, **dadurch gekennzeichnet, dass** sich auf einer radialen Position im Bereich der radialen Erstreckung der Rotorwicklungen (4) in Umfangsrichtung gesehen jeweils Wicklungstrennstege (4) und wicklungslose Trennstege (7), welche keine Rotorwicklung (4) umfassen, abwechseln.

5. Rotor nach Anspruch 4, **dadurch gekennzeichnet, dass** mindestens ein Teil oder alle der wicklungslosen Trennstege (7) eine grössere radiale Erstreckung aufweisen als die Wicklungstrennstege (4), und insbesondere, dass sich mindestens ein Teil oder alle der wicklungslosen Trennstege (7) weiter in Richtung zum Rotorzentrum hin erstrecken als die Wicklungstrennstege (4).

6. Rotor nach Anspruch 5, **dadurch gekennzeichnet, dass** sich die wicklungslosen Trennstege (7) in einer regelmässigen Abfolge in Umfangsrichtung gesehen jeweils einmal mehr und dann wieder weniger weit in Richtung zum Rotorzentrum hin erstrecken, und insbesondere, dass sich jeder Dritte wicklungslose Trennsteg (7) weiter in Richtung zum Rotorzentrum hin erstreckt als die beiden vor und nach ihm angeordneten wicklungslosen Trennstege (7).

7. Rotor nach einem der vorangehenden Ansprüche, **dadurch gekennzeichnet, dass** der Rotor (1) als selbstventilierender Rotor (1) mit einer oder mehreren axialen Ansaugöffnungen (5) ausgestaltet ist, und insbesondere, dass diese Öffnungen (5) axial durch den Rotor hindurchtreten.

8. Rotor nach Anspruch 7 und nach einem der Ansprüche 4 bis 6, **dadurch gekennzeichnet, dass** sich in Umfangsrichtung gesehen zwischen den axialen Ansaugöffnungen (5) radiale wicklungslose Trennstege befinden von denen ein Teil oder alle separat von den sich in Umfangsrichtung gesehen auf einer radialen Position im Bereich der radialen Erstreckung der Rotorwicklungen (4) mit den Wicklungstrennstegen (4) abwechselnden wicklungslosen Trennstegen (7) ausgebildet sind und mindestens ein Teil oder alle in Umfangsrichtung gesehen zu diesen versetzt angeordnet sind und insbesondere, dass im wesentlichen keine Überlappung in radialer Richtung zwischen den in Umfangsrichtung gesehen zwischen den Wicklungstrennstegen (4) angeordneten wicklungslosen Trennstegen (7) und den zwischen den Ansaugöffnungen (5) angeordneten wicklungslosen Trennstegen besteht.

9. Rotor nach einem der Ansprüche 7 oder 8, **dadurch gekennzeichnet, dass** die Ansaugöffnungen (5) eine Vielzahl von Bohrungen (5) oder Kreisringsegmenten sind, und insbesondere, dass diese jeweils mit einer bestimmten Anzahl von Kühlkanälen (6) in Verbindung stehen.

10. Verwendung des Rotors nach einem der vorangehenden Ansprüche in einem gasgekühlten, insbesondere luftgekühlten, Generator und/oder Motor.
